# EUROPEAN PATENT SPECIFICATION

(11) **EP 3 556 238 B1**
(45) Date of publication and mention of the grant of the patent: **07.06.2023**
(21) Application number: 18168214.7
(22) Date of filing: 19.04.2018
(51) Int. Cl.: A43B 7/12, A43B 23/07, A43B 23/02, A43B 23/08, B29D 35/00

(54) **ARTICLE OF FOOTWEAR, AND METHOD FOR MANUFACTURING SUCH AN ARTICLE**
SCHUHARTIKEL UND VERFAHREN ZUR HERSTELLUNG SOLCH EINES ERZEUGNISSES
ARTICLE DE CHAUSSURE ET PROCÉDÉ DE FABRICATION D'UN TEL ARTICLE

(43) Date of publication of application: 23.10.2019
(73) Proprietor: Dunlop Protective Footwear B.V., 8102 HS Raalte (NL)
(72) Inventor: Bongers, Elroy, 3817 DN Amersfoort (NL)
(74) Representative: Nederlandsch Octrooibureau

(56) References cited:
- EP-A1- 2 878 219
- GB-A- 2 249 940
- US-A1- 2005 034 330
- US-A1- 2015 230 553

## Description

### Technical Field

The invention relates to an article of footwear, and to a method for manufacturing such an article.

### Background Art

Footwear products are known that include a shaft and a liner that extend over the wearer's ankles and lower leg, and which are watertight but still reasonably comfortable to wear. For instance, patent document US2013/0239439A1 describes a boot that comprises a waterproof full-foot neoprene sock with interconnected foot and leg portions, and an outer layer that is moulded directly onto and around the foot portion of the neoprene sock, while leaving the sidewall and calf-side portions of the sock substantially uncovered by the moulded outer layer. Although the neoprene sock confers substantial flexibility on the boot, the required waterproofness of this sock has a negative impact on the climate inside the boot, and will cause the interior of the boot to become noticeably damp after prolonged wearing. EP 2 878 219 A1 describes a boot with a sole and an upper. The upper has an inner liner and an outer shell. The inner liner is partially covered with the outer shell, creating exposed and unexposed portions. The first exposed portion is a region which corresponds to a front side of an ankle of a wearer and is a region where the inner liner is exposed. The second exposed portion is a region which corresponds to a calf of the wearer and is a region where the inner liner is exposed.

It would be desirable to provide a footwear product, for instance a boot or high-top, which provides improved comfort for the wearer.

### Summary of Invention

Therefore, according to a first aspect of the invention, there is provided a waterproof footwear product, for instance a boot or high-top, in accordance with claim 1. The waterproof footwear product comprises an upper and an outsole that is fixed to the upper. The upper includes a liner and a moulded waterproof shell. The liner defines an inward surface that encloses an interior void for accommodating a foot, and forms a foot portion and a leg portion. The moulded waterproof shell envelops at least the foot portion of the liner. The liner is formed of a plurality of overlapping and adjoining layers, which jointly form a laminate and include a first layer that consists essentially of a flexible fabric with a high strength, a second layer that consists essentially of a compressible open-cell foam, and a third layer that consists essentially of a waterproof but water vapour permeable membrane.

The composite laminate structure of the flexible liner with (at least) three separate layers facilitates separate optimization of strength, flexibility, compressibility, water vapour permeability, and water resistance properties of the liner, to provide footwear with a high level of comfort and durability.

The fabric of the first layer has considerable strength, al as well as out-of-plane structural flexibility to sustain folding or bending without breaking or permanently deforming. The first fabric layer may for instance be formed of interwoven synthetic fibres with a high ultimate tensile strength. Breaking forces (i.e. forces recorded at the point of rupture) for the resulting liner may be at least 200 Newton (N), for instance 400 N, and/or of up to 800 N, measured along the warp and weft directions of the fabric layer and by test procedures according to EN ISO 13934-1. Alternatively or in addition, the strength characteristics of the first layer may relate to a tear strength (i.e. a required force for creating and further developing a local tear) of at least 5 N, for instance 15 N, and/or of up to 25 N, measured along the warp and weft directions of the fabric layer and by test procedures according to EN ISO 13934-1. The high strength of the first layer strongly reduces the likelihood of tearing the liner during use. The first layer may have a thickness in a range of 0.2 millimetres (mm) to 0.5 mm, preferably in a range of 0.3 mm to 0.4 mm, and for instance about 0.35 mm.

Alternatively or in addition, the strength properties of this layer may include a high abrasion resistance, in particular when the first layer forms an innermost liner layer that directly faces the interior void. This abrasion resistance may be defined by EN ISO 12947-2:1998/C1:2002, and tested with a procedure according to EN ISO 20344 in which the layer is periodically subjected to a weight of 12 kilopascal until at least one fibre in the fabric is completely ruptured. The abrasion resistance of the first layer may comply with at least 26000 cycles in a dry state, and at least 13000 cycles in a wet state, until the occurrence of fibre rupture.

The second layer with open cell foam is compressible, thus allowing the liner to deform and fit snugly around the wearer's foot and to slightly press against the wearer's foot in a uniform, well-distributed, but dynamically adaptable manner, without locally overstressing (e.g. pinching off) particular foot regions. This increases wearer comfort and reduces the probability that the foot is inadvertently pulled out of the footwear product. The density of the foam may be in a range of 60 to 130 grams per litre (g/l), and for instance about 95 g/l. The second layer may have an uncompressed thickness in a range of 1 millimetres to 11 millimetres, preferably in a range of 3 millimetres to 9 millimetres, and for instance 6 millimetres. The compressibility of the second layer may be such that it may temporarily and locally obtain a reduced thickness in a range from one half to one tenth of the uncompressed thickness, when subjected to compression forces along the thickness direction. Preferably, this second layer is substantially elastically compressible, so that it may temporarily and locally obtain a reduced thickness when subjected to compression forces, but will largely or entirely rebound to its original thickness when the compression is removed.

The open cell foam helps in regulating the climate inside the footwear product. The reticulated structure of the foam renders the second layer permeable to air, to promote ventilation. The reticulated structure also confers a significant liquid absorption capability on the second layer, which allows the liner to act as temporary absorption reservoir for moisture originating from the interior void (e.g. perspiration). Water absorption characteristics of the second layer may be at least 75 milligrams per square centimetre (mg/cm²), for instance about 125 mg/cm², and/or of up to 175 mg/cm², measured by a test procedure according to EN ISO 20344:2011. The open cell foam may further have good moisture wicking properties, so that is pulls moisture absorbed from the interior region of the boot towards the outer layers of the liner, where it can evaporate more easily. The open cell foam may also have anti-bacterial properties.

The membrane forming the third layer is waterproof but permeable to water vapour (which may also be referred to as "breathable"). Preferably, the waterproofness and water vapour permeability of the liner are primarily determined by the properties of this third layer. The waterproof properties of the membrane may confer on the liner a waterproof rating (i.e. penetration resistance of a fabric to hydrostatic pressure of a water column) in a range of 1000 mm to 10000 mm, for instance 5000 mm, measured by a test procedure according to ISO 811:1981. The vapour permeability properties of the membrane may confer on the liner a water vapour transmission rate (WVTR) of at least 0.8 milligrams per square centimetre per hour (mg/cm²·h), for instance 2.5 mg/cm²·h, and/or of up to 4.0 mg/cm²·h, measured by a test procedure according to EN ISO 20345:2011. Alternatively or in addition, the vapour permeability properties of the membrane may confer on the liner a water vapour coefficient of at least 20 milligrams per square centimetre (mg/cm²), also measured by a test procedure according to EN ISO 20345:2011.

In embodiments, the first layer directly borders and faces the interior void, and is successively covered by the second layer and the third layer respectively.

This ordering of said three layers, and in particular a third layer that is at or close to the outward surface of the liner, ensures that the third layer will prevent water originating from outside the footwear product from entering the footwear product. This water cannot soak the first and second layers, nor pass through to the footwear interior.

In embodiments, the overlapping and adjoining layers further comprise a fourth layer, which defines an outward surface of the liner, and which consists essentially of a fabric with high tear strength and tensile strength.

A fourth outer layer of strong fabric may be added, to increase durability of the liner. This fourth layer may also be designed to provide the liner with an appealing aesthetic appearance. The fourth layer may have a thickness in a range of 0.2 millimetres to 0.5 millimetres, preferably in a range of 0.3 millimetres to 0.4 millimetres, for instance about 0.35 millimetres. The fabric of this fourth layer may also be formed of woven synthetic fibres with a high ultimate tensile strength. The first and fourth layers may jointly confer on the liner the breaking force of at least 200 N, for instance 400 N, and/or of up to 800 N, measured along the warp and weft directions of the fabric layers. The characteristics of the fourth layer may also include a tear strength of at least 5 N, for instance 15 N, and/or of up to 25 N, along warp and weft directions. The layers may cooperate to confer on the liner a combined tear strength of at least 30 N.

In embodiments, the open-cell foam of the second layer consists essentially of a substantially elastically compressible open cell polyurethane foam.

The PU foam may be substantially elastically compressible and have a low compression set, so that only little permanent deformation remains after removal of an applied force. The compression set of the open cell PU foam may for instance be in a range from 0% to 10%, and for instance about 5%, measured by a method A test procedure according to DIN EN ISO 1856:2007. The low compression set assures that temporary deformations of the liner that occur while wearing the footwear will be largely (or even entirely) reversible. This low compression set ensures longevity of the comfortable fit, and provides an improvement over liners made of neoprene, which typically have a larger compression set of e.g. 70% or more.

The PU open cell foam structure may further confer on the second layer a water desorption characteristic of at least 90% and potentially up to 100%, measured by a test procedure according to EN ISO 20344:2011.

In embodiments, the membrane in the third layer is a microporous polyurethane film, a microporous polyester film, or a microporous polytetrafluoroethylene film. The film may have a thickness in a range of 20 micrometres to 40 micrometres, for instance about 30 micrometres.

In embodiments, the shell is directly moulded and affixed to the liner, so that the liner is non-removable from the footwear product.

The shell is preferably moulded directly onto the liner by an injection moulding process - for instance via reaction injection moulding (RIM) of a thermosetting polymer, or injection moulding of a thermoplastic polymer - to yield a flexible continuous (i.e. unitary) layer of moulded material that tightly envelops and is permanently fixed to the liner. The proposed insert may thus be incorporated in a footwear product via a manufacturing process that is largely relies on known injection moulding techniques, and which requires no or relatively little adaptation of the existing moulding components (e.g. the last, moulding shells, and sole plates).

In all embodiments, the leg portion of the liner extends upwards from the foot portion and beyond the shell to form a shaft, and one or more shaft portions of the liner remain exposed and uncovered by the shell.

The exposed shaft portions that are not covered by the moulded shell remain flexible when the footwear product is worn. When the wearer inserts a foot into the interior void, takes off the boot, or flexes his/her lower leg relative to the foot, the exposed shaft portions easily deform without requiring a large force. This renders the footwear product more comfortable to use.

In all embodiments, the shell extends upwards and only partially along the leg portion of the liner, to define a front shell portion on a shin-side of the shaft, a rear shell portion on a calf-side of the shaft, and lateral shell portions on opposite lateral sides of the shaft. The lateral shell portions have a reduced thickness, to locally increase an in-plane flexibility and allow the front and rear shell portions to temporarily deflect outwards when a foot is inserted into the interior void.

In embodiments, the waterproof footwear product further comprises an insert formed of a material with an increased hardness and stiffness relative to the shell, and arranged between the liner and the shell. This insert is formed as a single body that includes a protruding portion, a heel counter, and a shank. The protruding portion extends upwards from the heel counter and along the rear shaft region of the liner, and provides a guiding trajectory for a heel of the foot during insertion into the interior void.

The unitary insert with the integrated shank, the heel counter, and the protruding portion forms a single stabilizer member with three-fold functionality. The shank forms an integral part of the insert, and extends from the heel portion along the sole and to the region near the toes, to form a reinforcing arch support between the heel and the frontal region of the foot sole. The shank may confer increased stiffness and torsional resistance against rotational deformation of the sole region about a longitudinal direction (i.e. against rotation of the nose region relative to the heel region, about a nominal axis that extends from the heel to the toes). The heel counter also forms an integral part of the insert, and extends around lateral and rear parts of the liner's heel region, to confer increased rigidity to the article's heel portion. An inward surface of the heel counter conforms to the outward heel surface, which helps to reduce or prevent sliding of the heel within the interior void. The heel counter may confer increased stiffness and compressional resistance against linear deformation of the heel region along a transverse direction (i.e. between lateral sides of the heel region). The protruding portion forms an integral part of the insert that resembles a shoehorn structure for guiding the heel when the foot is inserted into the interior void. The protruding portion projects predominantly upwards over a predetermined distance from an upper rear portion of the heel counter. This distance is at least half the vertical dimension of a human heel i.e. half the height of the heel bone (calcaneus), measured from the foot sole (plantar aspect) for a foot corresponding to the size of the footwear. The heel counter of the unitary insert may cooperate with the compressible liner, to press back against the wearer's heel when the user raises his/her foot, thereby holding the foot securely within the footwear product

In further embodiments, the protruding portion is deflected rearwards from a mechanical equilibrium position when arranged between the liner and the shell, to be subjected to rearwards pre-stress along the negative longitudinal direction and relative to a pivot region on the heel counter, and to exert a forward moment on the rear portion of the liner.

The rearwards deflection of the protruding portion is a deformation relative to a mechanical equilibrium shape of the insert in which the protruding portion is tilted slightly forwards relative to the heel counter. The rearwards deflection imparts a pre-stress on the protruding portion and pivot region. Conversely, the embedded, pre-stressed protruding portion exerts a forward moment on the rear shaft region of the liner as well as on the heel and Achilles tendon of a foot in the interior void. The resulting inwards moment improves the internal grip exerted by the compressible liner and insert on the heel, and yields increased wearing comfort. The upper edge of the protruding portion may be rotationally deflected rearwards relative to the heel counter and shank over an arc length and about a pivot region on the heel counter. In exemplary embodiments, a ratio of the deflection arc length to a length of the protruding portion may be in a range of 5% to 15%, and preferably about 10%. For instance, for a protruding portion with a vertical length of about 100 millimetres, the arc length may be in a range from 5 to 15 millimetres, and may for instance be approximately 10 millimetres.

In further embodiments, the shell extends upwards and only partially along the leg portion of the liner, to define a rear shell portion on a calf-side of the shaft. The rear shell portion includes an upper edge that is located above and near an upper rear edge of the protruding portion of the insert.

The protruding guiding portion of the insert may thus be entirely embedded inside the material of the rear shell portion, while leaving a substantial part of the rear shaft portion of the liner exposed and uncovered by the shell. This yields an optimal balance between guiding the heel while putting on the footwear product, and flexibility of the shaft while wearing the product.

In embodiments, the shell consists essentially of a unitary body of moulded thermosetting or thermoplastic elastomer, preferably polyurethane.

The proposed insert may be incorporated in an article of footwear that is formed using injection moulding techniques that are known per se, while requiring no or relatively little adaptation of the existing moulding components (e.g. the last, moulding shells, and sole plate). The hardness of flexible material of the upper and the sole portion may be quantified by a shore hardness ranging from 30 to 70 shore A (metric for indentation hardness by a durometer or shore hardness test DIN ISO 868:2003). The insert may be embedded in the flexible material of the shell.

According to a second aspect, and in accordance with the advantages and effects described herein above, there is provided a method for manufacturing a waterproof footwear product (for instance a boot or high-top) according to the first aspect.

### Brief Description of Drawings

Embodiments will now be described, by way of example only, with reference to the accompanying schematic drawings in which corresponding reference symbols indicate corresponding parts.
Figures 1a and 1b schematically show perspective views of an article of footwear according to an embodiment;
Figure 2a shows a side view of the footwear embodiment from figures 1a-1b;
Figures 2b-2c shows sagittal cross-sectional views of the footwear embodiment from figures 1a-2a;
Figures 3a-3b show sagittal cross-sectional views of an article of footwear according to another embodiment, and
Figures 4a-4d schematically show embodiments of a moulding method according to an embodiment.

The figures are meant for illustrative purposes only, and do not serve as restriction of the scope or the protection as laid down by the claims.

### Description of Embodiments

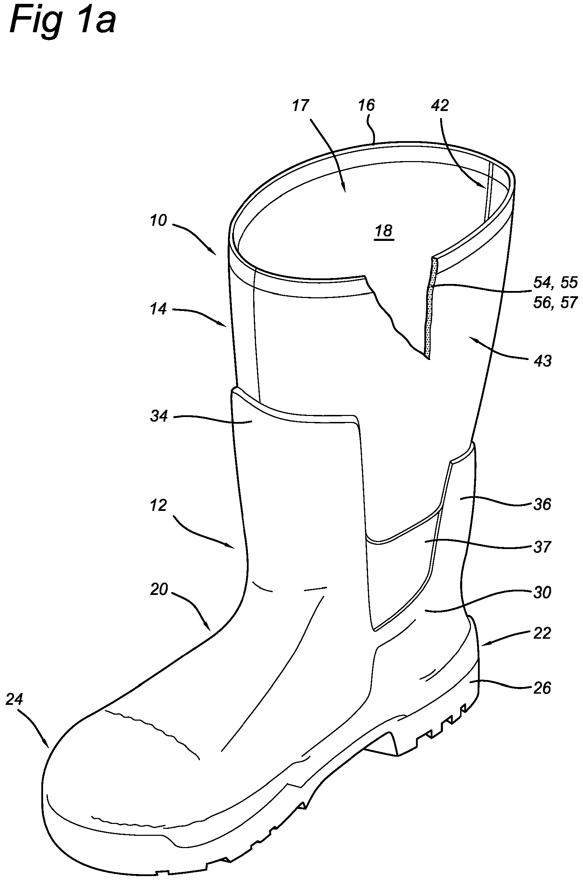

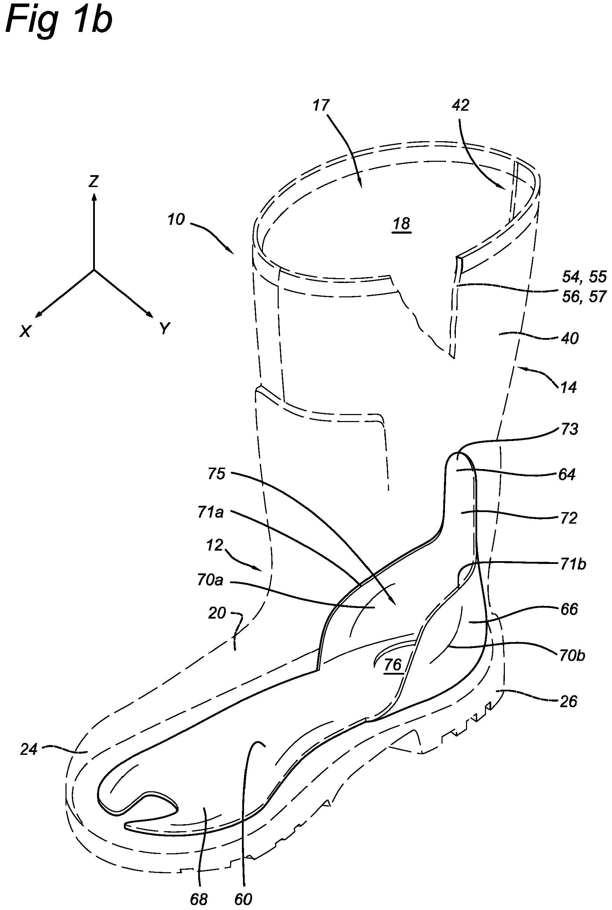

Figures 1a and 1b schematically show an exemplary embodiment of a boot 10 for outdoor activities, which provides optimal wearer comfort. The boot 10 includes an upper 12, a shaft 14, and an outsole 26. The upper 12 includes an instep 20 with a heel 22 and a nose 24. The shaft 14 extends upwards towards an upper edge 16. This upper edge 16 bounds an insertion opening 17 that provides a path to a void 18 inside the boot 10, which is adapted for accommodating a wearer's foot.

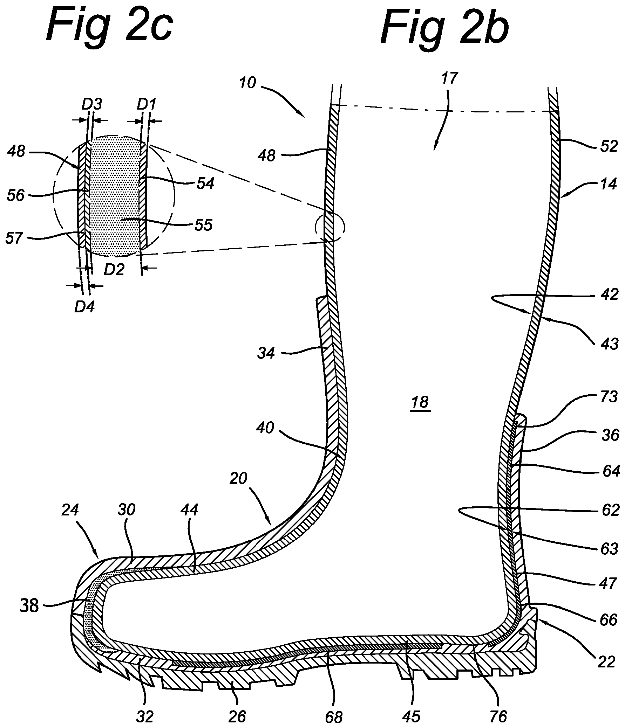

The upper 12 includes a sock-shaped liner 40 and a moulded shell 30. The liner 40 forms a full-foot sock around the interior void 18, with a shape and size that closely match those of the wearer's foot. The shell 30 forms an enveloping layer that partially covers and encloses the liner 40. The liner 40 is flexible and compressible, and provides a comfortable fit for securing the foot inside the boot 10. The liner 40 forms a waterproof but breathable sock, which is composed of a laminate of flexible material layers 54, 55, 56, 57. Figures 1a-1b show a (virtual) partial cutout near the upper edge 16 of the liner 40, to show a cross-section of material layers 54, 55, 56, 57. This layer arrangement will be further explained with reference to figure 2c.

The shell 30 and the outsole 26 both consist essentially of relatively rigid elastomeric materials, for instance polyurethane (PU). These elastomeric materials provide durability and strength to the boot 10, and jointly form a fluid-impermeable outer structure that encloses the foot region of the interior void 18 in a watertight manner. The liner 40 is only partially covered by the shell 30, and extends upwards beyond the shell 30 to form the shaft 14 with an exposed outward surface 44 that is not covered by the shell 30.

Figure 1b shows that a structural insert 60 is provided on the inside of this exemplary boot 10. This insert 60 is interposed between the liner 40 and the shell 30, and is adapted to extend along the plantar aspect, the heel, and part of the Achilles tendon of the wearer's foot (when inside void 18). The insert 60 forms a curved monocoque body, which defines an inward surface 62 that is essentially congruent to part of an outward surface 43 of the liner 40. The insert has increased hardness and stiffness relative to the shell 30, and is in this example formed by injection moulding of a glass fibre reinforced TPU material.

The insert 60 includes a protruding portion 64, a heel counter 66, and a shank 68. The insert 60 is adapted to facilitate inserting of a foot into the boot 10, and to increase resistance of the insole 32, outsole 26, and heel 22 against deformations. The heel counter 66 is adapted to surround the wearer's heel; the shank 68 is adapted to extend along the arch and beyond the ball of the wearer's foot, and the protruding portion 64 forms a shoehorn structure for guiding the wearer's heel when the foot is inserted into void 18.

The heel counter 66 defines two sidewalls 70a, 70b, and a rear wall 72. The sidewalls 70 are adapted to enclose the wearer's heel from lateral sides, and are interconnected via the rear wall 72. The heel counter 66 thus forms a concave body that is adapted to extend around and cover the wearer's heel. The sidewalls 70 extend on two lateral sides upwards along the vertical direction +Z, each defining a respective upper edge 71a, 71b. These edges 71 jointly delimit a top opening 75 from lateral directions. The sidewalls 70 extend up to just below the ankles of the foot (i.e. without covering the ankles), thus leaving the medial and lateral malleoli of the foot exposed.

The edges 71 curve inwardly towards each other, to create a reduced opening dimension below the ankle. The top opening 75 is relatively small, having a width that is less than an internal width between central regions of the sidewalls 70. The upper edges 71 are sufficiently flexible to allow temporarily outward flexing, if subjected to downwards (or upwards) and sideways forces from a heel that is pressed downwards into (or pulled upwards out of) the heel counter 66.

The protruding portion 64 projects upwards from the rear wall 72 of the heel counter 66, and extends along a rear shaft region of the liner 40. A lower part of the protruding portion 64 that is nearest to the heel counter 66 has reduced bending resistance, to form a pivot region 74 that allows flexing of the protruding portion 64 along the longitudinal direction X, about a nominal pivot axis A in the transverse direction Y through the pivot region 74, and relative to the sidewalls 70 and rear wall 72.

In a region where the shank 68 extends into the heel counter 66, the insert 60 comprises a heel aperture 76 with a circular shape. A cross-sectional dimension Ø of this aperture 76 is about 40 millimetres

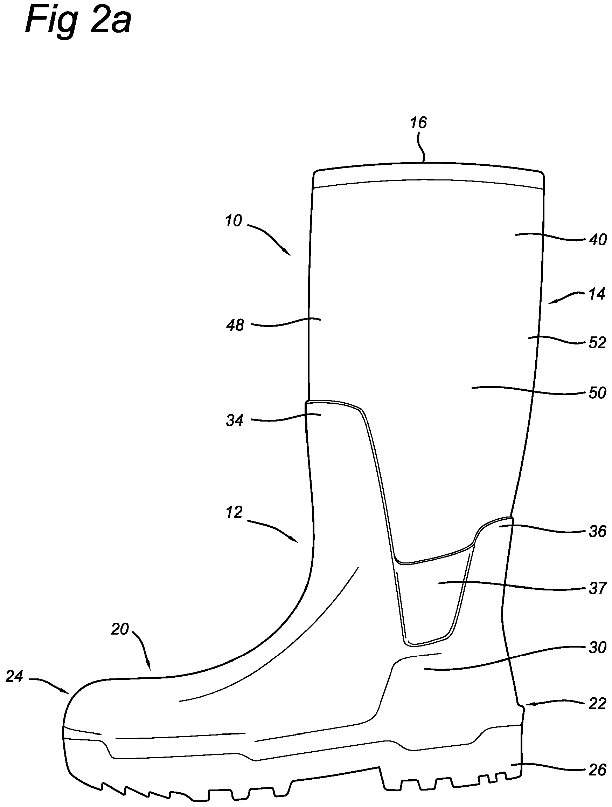

Figures 2a and 2b show lateral and sagittal cross-sectional views of the exemplary boot 10 from figures 1a-b. Figure 2b illustrates that the liner 40 has a foot portion 44 adapted to cover the wearer's foot, and a leg portion 46 extending upwardly and adapted to cover the wearer's ankles, shin, and calf, up a part of the wearer's leg.

The shell 30 includes an integrally moulded foot portion that covers and extends completely around the foot portion 44 of the liner 40. At a bottom side, the shell 30 includes an insole portion 32 that is sandwiched between the outsole 26 on the one hand, and the liner 40 and insert 60 on the other hand. The shell 30 further includes a front portion 34, a rear portion 36, and two lateral portions 37, which extend upwards along the shaft 14. The lateral shell portions 37 interconnect the front and rear shell portions 34, 36 along the periphery of the shaft 14, but extend over smaller heights along the shaft 14 to cover only ankle portions of the liner 40. These lateral shell portions 37 have a reduced thickness to increase flexibility, and allow the front and rear shell portions 34, 36 to flex outwards relative to each other.

Figure 2b further illustrates the insert 60, which is interposed between the shell 30 and the liner 40, and extends along a sole portion 45 and heel portion 47 of the liner 40. The outward surface 63 of the insert 60 faces towards and abuts part of an inward surface of the shell 30. The inward surface 62 of the insert 60 faces inwards towards void 18, and abuts the outward surface 43 of the liner 40. The insert 60 is embedded in the flexible material of the shell 30, such that the inward surface 62 of the insert 60 is substantially level with the directly surrounding inward surface portion of the shell 30.

The heel counter 66 extends along the heel portion 47 of the liner 40. The shank 68 is interposed between the insole portion 32 of the shell 30 and the sole portion 45 of the liner 40. The protruding portion 64 projects upwards from the heel counter 66 along the rear shell portion 36, but remains just below an upper rear edge of the rear shell portion 36.

The heel aperture 76 is located in the heel portion 47 of the liner 40, and allows the flexible material of the insole 32 to extend through this aperture 76 and form a flexible pad for the wearer's heel.

Figure 2b further illustrates that the boot 10 may include a separate toecap 38 in the nose 24, and arranged between the shell 30 and the liner 40. This toecap 38 may be made from metal, rigid plastic, or wood, and protects the wearer's toes against crushing forces from heavy objects.

In this exemplary boot 10, the exposed portions of the liner 40 include a front shaft portion 48, two opposite lateral shaft portions 50, and a rear portion 52. The exposed front portion 48 extends from the upper edge 16 downwards along part of the wearer's shin. Each of the lateral shaft portions 50 is located on a respective lateral side of the shaft 14, and extends from the upper edge 16 downwards to just above a corresponding ankle. The rear shaft portion 52 extends from the upper edge 16 downwards along part of the wearer's calf.

Figure 2c shows part of the liner 40 structure. The liner 40 forms a waterproof sock, which is formed of a plurality of overlapping and adjoining layers that jointly form a flexible laminate. This laminate is composed of a first layer 54, a second layer 55, a third layer 56, and a fourth layer 57.

The first layer 54 is formed of a flexible fabric material, which has water vapour permeable properties and a high in-plane tensile strength. This first layer 54 defines the inward surface 42 of the liner 40 that delimits the contour of the interior void 18. The first layer 54 may have a thickness D1 in a range of 0.2 millimetres to 0.5 millimetres, and in this example about 0.35 millimetres.

The second layer 55 is formed of a relatively thick but flexible layer of water vapour permeable material, which is affixed to and covers the outer surface of the first layer 54. The second layer 55 consists essentially of an open-celled foam material, which is compressible to allowing the liner 40 to deform and fit snugly around the wearer's foot, and to slightly press against the wearer's foot in a uniform, well-distributed, but dynamically adaptable manner, without locally overstressing (e.g. pinching off) particular foot regions. The second layer 55 may have an uncompressed thickness D2 in a range of 1 millimetres to 11 millimetres, and in this example about 6 millimetres. This second layer 55 is compressible, such that the second layer 55 may temporarily and locally obtain a reduced thickness of down to one tenth of the uncompressed thickness D2 when subjected to compression forces along the thickness direction. This open cell foam may additionally have anti-bacterial properties.

The third layer 56 consist essentially of a waterproof but water vapour permeable membrane, and is affixed to and covers the entire outer surface of the second layer 55. This membrane 56 is formed of an ultra-thin moisture barrier, which allows moisture vapours to escape from the interior void 18, while preventing outside water from penetrating the interior void 18. This membrane 56 may be one of a microporous PU, microporous polyester, or microporous polytetrafluoroethylene film. The third membrane layer 56 may have a thickness D3 in a range of 0.2 millimetres to 0.5 millimetres, and in this example about 0.35 millimetres.

The fourth layer 57 forms a protective and decorative cover, which is affixed to and covers the outer surface of the third layer 56. The fourth layer 57 is formed of a strong durable cloth or fabric, having an outer surface that corresponds to the outward surface 43 of the liner 40 and that provides an outwardly attractive appearance. This fourth layer 57 may have water-repellent properties, and/or have one or more selected colours and/or visual features for aesthetic purposes. The fourth layer 57 may have a thickness D4 in a range of 0.2 millimetres to 0.5 millimetres, and in this example about 0.35 millimetres.

The liner 40 thus forms a laminated structure, wherein the first layer 54 and fourth layer 57 form inner and outer layers respectively, between which the second and third layers 55, 56 are interposed. Each pair of directly adjacent layers is interconnected by lamination using an adhesive or diffusion bonding, mechanical bonding, or a combination thereof. The composite laminate structure of the flexible liner 40 with a plurality of distinct layers 54-57 allows separate optimization of tensile strength, compressibility, breathability, and water resistance of the liner 40.

The foot fits snugly inside the interior void 18 of the boot 10. As the shell 30 does not cover the shaft portions 48-52, these exposed portions 48-52 remain flexible when the boot 10 is worn. When the wearer inserts a foot into the void 18, takes off the boot 10, or flexes his/her lower leg relative to the foot, the exposed portions 48-52 and lateral shell portions 37 easily deform without requiring a large force. As a result, the boot 10 is comfortable to put on, wear, and take off.

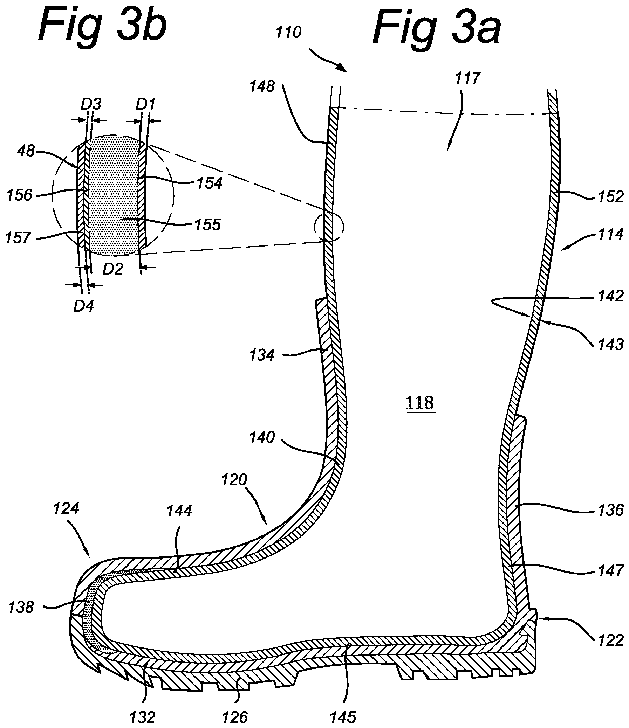

Figures 3a-3b show another embodiment of a boot 110. Features in the boot that have already been described above with reference to the first boot embodiment 10 (and in particular figures 1a-2c) may also be present in the boot 110 shown in figures 3a-3b, and will not all be discussed here again. For the discussion with reference to figures 3a-3b, like features are designated with similar reference numerals preceded by 100, to distinguish the embodiments.

This exemplary boot 110 includes a liner 140 with a similar layered structure as shown in figure 2c, but omits a 3-part structural insert 60 as shown in figures 1b and 2b.

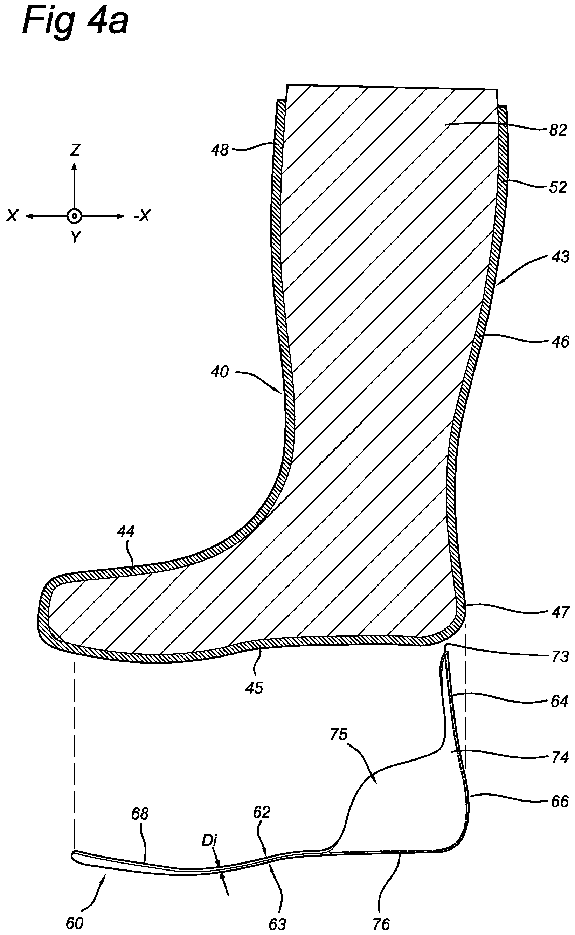

Figures 4a-4d schematically illustrate a method for manufacturing an article of footwear, for instance a boot 10 as shown in figures 1a-2c.

Figure 4a illustrates the initial provision of a last 82, which serves to temporarily occupy the inner void 18 of the boot 10 during subsequent moulding stages. A multi-layered compressible liner 40 is placed around the last 82, so that the liner 40 defines i.a. a foot portion 44 including a sole portion 45 and a heel portion 47, as well as a leg portion 46 including a front, lateral, and rear shaft portions 48, 50, 52.

Subsequently, an insert 40 is provided, which is formed as a monocoque body and includes a protruding portion 64, a heel counter 66, and a shank 68, which are interconnected. This insert 60 has a mechanical equilibrium shape in which the protruding portion 64 is tilted forwards along the positive longitudinal direction X relative to the heel counter 66 and the shank 68.

The insert 60 is placed on the outward surface 43 of the liner 40, so that the protruding portion 64 covers a rear part of the leg portion 46 of the liner 40, that the heel counter 66 covers the heel portion 47 of the liner 40, and that the shank 68 covers the sole portion 45 of the liner 30. When the insert 60 is placed over the last 82 and liner 40, the rear leg regions of liner 40 and last 82 urge and pivot the protruding portion 64 of the insert 60 clockwise (i.e. rearwards along the negative longitudinal direction -X) about pivot region 74 on the upper side of heel counter 66, to impart a pre-stress on the protruding portion 64. The pre-stress will be largely maintained by the liner 40 after the last 82 is removed and moulding has completed. Because of this pre-stress, the upper edge 73 of portion 64 of the embedded insert 60 is deflected rearwards over an arc length of approximately 10 millimetres about pivot region 74, relative to the slightly forwards sloped equilibrium position of this portion 64 for the insert 60 in unstressed state. The resulting pre-stress causes the protruding portion 64 to exert a forward moment on the liner 40 and the heel and Achilles tendon of the foot in the interior void 18, and thus improves internal grip.

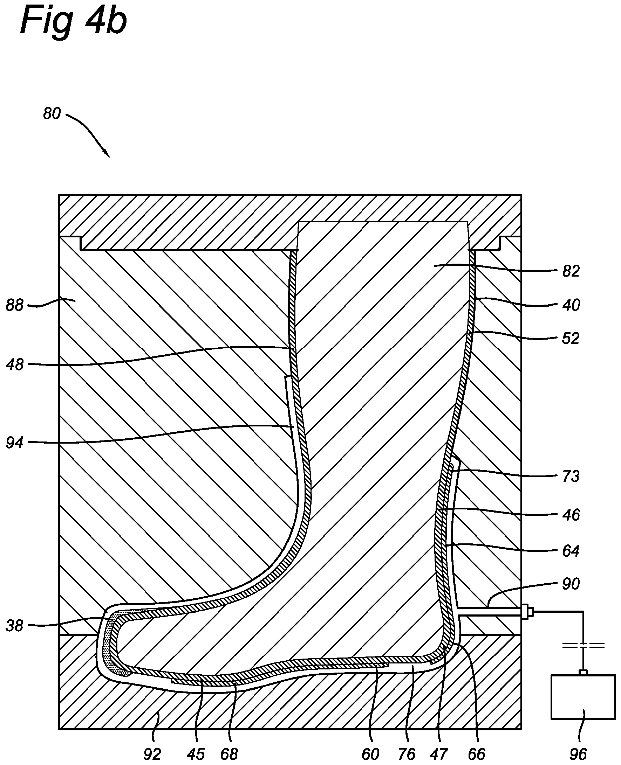

Figures 4b-4d schematically shows details of a moulding system 80, including moulding shells of which only one 88 is shown, a blind sole plate 92, a second sole plate 93, and supply mechanisms 90, 92 for supplying injection moulding material 97. In this example, the moulding material 97 is a PU. Relative movability of the last 82, moulding shells 88, and sole plates 92, 93 is obtained by dedicated positioning mechanisms, which have been omitted in figures 4b-4d for clarity.

Figure 4b illustrates that the last 82 with the liner 40 and insert 60 is placed in a space that is enclosed from lateral directions by the outer moulding shells 88, and from a lower direction by the blind plate 86. A moulding cavity 94 is defined between a joint inner surface of the outer moulding shells 88 and the blind plate 92 on the one hand, and the outer surfaces of the liner 40 and the insert 60 on the other hand. On a rear side, this moulding cavity 94 extends to just above the upper rear edge 73 of the protruding portion 64 of the insert 60. The moulding shells 88 abut the liner 40 in the front, lateral, and rear shaft portions 48-52, so that the moulding cavity 94 does not extend up to and along these shaft portions 48-52.

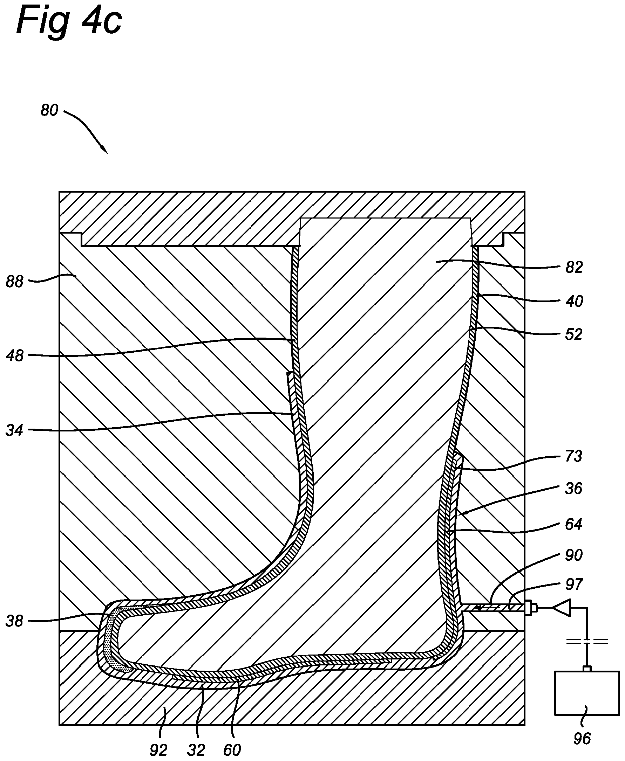

Figure 4c illustrates that a liquid moulding material 97 (e.g. liquid PU) is injected by source mechanism 96, via a supply channel 90 through a heel part of moulding shells 88, into the moulding cavity 94. The liquid moulding material 97 uniformly flows from the supply channel 90 through the cavity 94 and across the exposed outer surface portions of the liner 40 and the insert 60. The injected moulding material 97 in the cavity 94 is allowed to cure, to form the shell 30 with the insole portion 32 around the liner 40 and the insert 60. In the resulting arrangement, the insert 60 is enclosed between the liner 40 and the shell 30, and is partially embedded in the PU material of the shell 30.

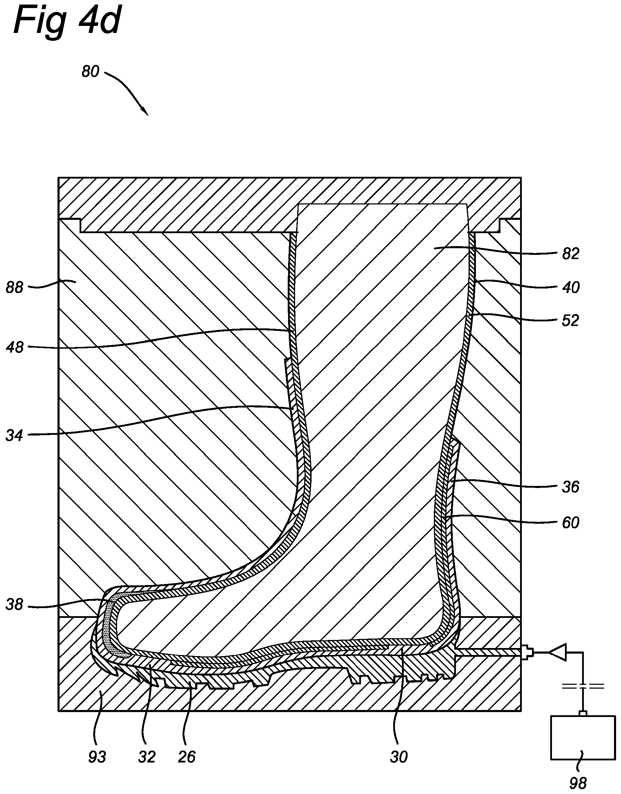

As illustrated in figure 4d, the blind plate 92 is removed from the lower part of the moulding shells 88 and the insole portion 32, after the shell 30 has cured. The blind plate 92 is replaced by the second sole plate 93 with a different profile, to form an outsole cavity below the cured insole portion 32. Liquid moulding material is injected by source 98 into this outsole cavity, and this material is allowed to cure to form the outsole 26 of the boot 10.

Finally, the moulding shells 88 and the second sole plate 93 are removed, and the resulting boot 10 is released from the last 82.

The present invention may be embodied in other specific forms without departing from its essential characteristics. The described embodiments are to be considered in all respects only as illustrative and not restrictive. The scope of the invention is therefore indicated by the appended claims rather than by the foregoing description.

For instance, in the exemplary embodiments described herein above, the flexible material of the moulded shell consists essentially of PU formed with a RIM technique. In alternative embodiments, the injection moulded flexible material of the shell may consist essentially of synthetic rubber, PVC, EVA, TPU, or other suitable thermosetting or thermoplastic polymers.

### List of Reference Symbols

- 10: footwear product (e.g. boot or high-top)
- 12: upper
- 14: shaft
- 16: upper edge
- 17: insertion opening
- 18: interior void
- 20: instep
- 22: heel
- 24: nose
- 26: outsole
- 30: moulded shell
- 32: insole portion
- 34: front shell portion
- 36: rear shell portion
- 37: lateral shell portions
- 38: toecap
- 40: liner
- 42: inward liner surface
- 43: outward liner surface
- 44: foot portion
- 45: sole portion
- 46: leg portion
- 47: heel portion
- 48: front shaft portion
- 50: lateral shaft portion
- 52: rear shaft portion
- 54: first layer
- 55: second layer
- 56: third layer
- 57: fourth layer
- 60: insert
- 62: inward surface (of insert)
- 63: outward surface (of insert)
- 64: protruding portion
- 66: heel counter
- 68: shank
- 70: sidewall
- 71: upper side edge
- 72: rear wall
- 73: upper rear edge
- 74: pivot region
- 75: top opening
- 76: heel aperture
- 80: moulding system
- 82: last
- 83: rear shaft portion
- 84: metatarsal portion
- 85: toe portion
- 86: sole portion
- 87: heel portion
- 88: moulding shell
- 90: supply channel
- 92: first sole plate (e.g. blind plate)
- 93: second sole plate
- 94: moulding cavity
- 96: injection moulding source
- 97: moulding material
- 98: further injection moulding source
- A: pivot axis
- X: first direction (e.g. longitudinal direction)
- Y: second direction (e.g. transverse direction)
- Z: third direction (e.g. vertical direction)

## Claims

1. A waterproof footwear product (10), for instance a boot or high-top, comprising an upper (12) and an outsole (26) that is fixed to the upper, wherein the upper includes:
- a liner (40), with an inward surface (42) that encloses an interior void (18) for accommodating a foot, and defining a foot portion (44) and a leg portion (46) that extends upwards from the foot portion (44);
- a moulded water-proof shell (30) that envelops at least the foot portion of the liner;
wherein the liner is formed of a plurality of overlapping and adjoining layers (54, 55, 56, 57), that jointly form a laminate and include:
- a first layer (54) consisting essentially of a flexible fabric with a high strength;
- a second layer (55) consisting essentially of a compressible open-cell foam, and
- a third layer (56) consisting essentially of a waterproof but water vapour permeable membrane;
wherein the leg portion (46) of the liner (40) extends beyond the shell (30) to form a shaft (14), with one or more shaft portions (48, 50, 52) of the liner remaining exposed and uncovered by the shell (30), wherein the shell (30) extends upwards and only partially along the leg portion (46) of the liner (40), to define a front shell portion (34) on a shin-side of the shaft (14), a rear shell portion (36) on a calf-side of the shaft (14), and lateral shell portions (37) on opposite lateral sides of the shaft, and wherein the lateral shell portions (37) have a reduced thickness to locally increase an in-plane flexibility and allow the front and rear shell portions to temporarily deflect outwards when a foot is inserted into the interior void (18).

2. The waterproof footwear product (10) according to claim 1, wherein the first layer (54) directly borders and faces the interior void (18), and is successively covered by the second layer (55) and the third layer (56) respectively.

3. The waterproof footwear product (10) according to claim 1 or 2, wherein the overlapping and adjoining layers (54, 55, 56, 57) further comprise a fourth layer (57), which consists essentially of a fabric with high tear strength and tensile strength, and which defines an outward surface (43) of the liner (40).

4. The waterproof footwear product (10) according to any one of claims 1-3, wherein the open-cell foam of the second layer (55) consists essentially of a substantially elastically compressible open cell polyurethane foam.

5. The waterproof footwear product (10) according to any one of claims 1-4, wherein the membrane in the third layer (56) is a microporous polyurethane film, a microporous polyester film, or a microporous polytetrafluoroethylene film, which may have a thickness in a range of 20 micrometres to 40 micrometres.

6. The waterproof footwear product (10) according to any one of the preceding claims, wherein the shell (30) is directly moulded and affixed to the liner (40), so that the liner is non-removable from the footwear product.

7. The waterproof footwear product (10) according to any one of claims 1-6, wherein the lateral shell portions (37) interconnect the front and rear shell portions (34, 36) along a periphery of the shaft (14), and the lateral shell portions (37) extend over smaller heights along the shaft (14) relative to the front and rear shell portions (34, 36) such as to cover only ankle portions of the liner (40).

8. The waterproof footwear product (10) according to any one of the preceding claims, further comprising an insert (60) formed of a material with an increased hardness and stiffness relative to the shell (30), and arranged between the liner (40) and the shell;
wherein the insert is formed as a single body that includes a protruding portion (64), a heel counter (66), and a shank (68), wherein the protruding portion extends upwards from the heel counter and along the rear shaft region of the liner, and provides a guiding trajectory for a heel of the foot during insertion into the interior void (18).

9. The waterproof footwear product (10) according to claim 8, wherein the protruding portion (64) is deflected rearwards from a mechanical equilibrium position when arranged between the liner (40) and the shell (30), so as to be subjected to a rearwards pre-stress along the negative longitudinal direction (-X) and relative to a pivot region (74) on the heel counter (66), and to exert a forward moment on the rear portion of the liner (40).

10. The waterproof footwear product (10) according to claim 8 or 9, wherein the shell (30) extends upwards and only partially along the leg portion (46) of the liner (40), to define a rear shell portion (36) on a calf-side of the shaft (14), which includes an upper edge that is located above and near an upper rear edge (73) of the protruding portion (64) of the insert (60).

11. The waterproof footwear product (10) according to any one of the preceding claims, wherein the shell (30) consists essentially of a unitary body of moulded thermosetting or thermoplastic elastomer, preferably polyurethane.

12. The waterproof footwear product (10) according to claim 11, wherein the shell (30) is moulded directly onto the liner (40) by an injection moulding process to form a flexible unitary layer of moulded material that tightly envelops and is permanently fixed to the liner (30).

13. The waterproof footwear product (10) according to any one of claims 8-12, wherein the insert (60) is embedded in the flexible material of the shell (30).

14. A method for manufacturing a waterproof footwear product (10) according to any one of claims 1-13.

## Patentansprüche

1. Wasserdichter Schuhartikel (10), zum Beispiel ein Stiefel oder ein High-Top, der ein Obermaterial (12) und eine Laufsohle (26) aufweist, die an dem Obermaterial fixiert ist, wobei das Obermaterial Folgendes beinhaltet:
- eine Auskleidung (40) mit einer inneren Fläche (42), die einen inneren Hohlraum (18) zur Aufnahme eines Fußes umschließt, und die einen Fußabschnitt (44) und einen Beinabschnitt (46) definiert, der sich von dem Fußabschnitt (44) nach oben erstreckt;
- eine geformte wasserdichte Hülle (30), die zumindest den Fußabschnitt der Auskleidung umhüllt;
wobei die Auskleidung aus einer Mehrzahl von sich überlappenden und aneinandergrenzenden Schichten (54, 55, 56, 57) gebildet ist, die gemeinsam einen Verbund bilden und folgendes beinhalten:
- eine erste Schicht (54), die im Wesentlichen aus einem flexiblen Gewebe mit einer hohen Festigkeit besteht;
- eine zweite Schicht (55), die im Wesentlichen aus einem komprimierbaren offenporigen Schaumstoff besteht, und
- einer dritten Schicht (56), die im Wesentlichen aus einer wasserdichten, aber wasserdampfdurchlässigen Membran besteht;
wobei sich der Beinabschnitt (46) der Auskleidung (40) über die Hülle (30) hinaus erstreckt, um einen Schaft (14) zu bilden, wobei ein oder mehrere Schaftabschnitte (48, 50, 52) der Auskleidung von der Hülle (30) freigelegt und unbedeckt bleiben,
wobei sich die Hülle (30) nach oben und nur teilweise entlang des Beinabschnitts (46) der Auskleidung (40) erstreckt, um einen vorderen Hüllenabschnitt (34) auf einer Schienbeinseite des Schafts (14), einen hinteren Hüllenabschnitt (36) auf einer Wadenseite des Schafts (14) und seitliche Hüllenabschnitte (37) auf gegenüberliegenden seitlichen Seiten des Schafts zu definieren, und
wobei die seitlichen Hüllenabschnitte (37) eine reduzierte Dicke haben, um eine in der Ebene liegende Flexibilität lokal zu erhöhen und es den vorderen und hinteren Hüllenabschnitten zu ermöglichen, sich vorübergehend nach außen zu biegen, wenn ein Fuß in den inneren Hohlraum (18) eingeführt wird.

2. Wasserdichter Schuhartikel (10) nach Anspruch 1, wobei die erste Schicht (54) unmittelbar an den inneren Hohlraum (18) angrenzt und diesem zugewandt ist und nacheinander jeweils von der zweiten Schicht (55) und der dritten Schicht (56) abgedeckt wird.

3. Wasserdichter Schuhartikel (10) nach Anspruch 1 oder 2, wobei die sich überlappenden und aneinandergrenzenden Schichten (54, 55, 56, 57) ferner eine vierte Schicht (57) aufweisen, die im Wesentlichen aus einem Gewebe mit hoher Reiß- und Zugfestigkeit besteht und die eine äußere Fläche (43) der Auskleidung (40) definiert.

4. Wasserdichter Schuhartikel (10) nach einem der Ansprüche 1 bis 3, wobei der offenporige Schaumstoff der zweiten Schicht (55) im Wesentlichen aus einem im Wesentlichen elastisch komprimierbaren offenporigen Polyurethanschaum besteht.

5. Wasserdichter Schuhartikel (10) nach einem der Ansprüche 1 bis 4, wobei die Membran in der dritten Schicht (56) ein mikroporöser Polyurethanfilm, ein mikroporöser Polyesterfilm oder ein mikroporöser Polytetrafluorethylenfilm ist, der eine Dicke in einem Bereich von 20 Mikrometern bis 40 Mikrometern haben kann.

6. Wasserdichter Schuhartikel (10) nach einem der vorhergehenden Ansprüche, wobei die Hülle (30) direkt an die Auskleidung (40) geformt und befestigt ist, so dass die Auskleidung nicht von dem Schuhartikel entfernt werden kann.

7. Wasserdichter Schuhartikel (10) nach einem der Ansprüche 1 bis 6, wobei die seitlichen Hüllenabschnitte (37) die vorderen und hinteren Hüllenabschnitte (34, 36) entlang eines Umfangs des Schafts (14) miteinander verbinden und die seitlichen Hüllenabschnitte (37) sich relativ zu den vorderen und hinteren Hüllenabschnitten (34, 36) über geringere Höhen entlang des Schafts (14) erstrecken, so dass sie nur Knöchelabschnitte der Auskleidung (40) abdecken.

8. Wasserdichter Schuhartikel (10) nach einem der vorhergehenden Ansprüche, der ferner eine Einlage (60) aufweist, die aus einem Material mit einer erhöhten Härte und Steifigkeit gegenüber der Hülle (30) gebildet ist und zwischen der Auskleidung (40) und der Hülle angeordnet ist;
wobei der Einsatz als ein einzelner Körper gebildet ist, der einen vorstehenden Abschnitt (64), eine Fersenkappe (66) und einen Flügel (68) beinhaltet, wobei sich der vorstehende Abschnitt von der Fersenkappe nach oben und entlang der hinteren Schaftregion der Welle der Auskleidung erstreckt und eine Führungsbahn für eine Ferse des Fußes während des Einsetzens in den inneren Hohlraum (18) bereitstellt.

9. Wasserdichter Schuhartikel (10) nach Anspruch 8, wobei der vorstehende Abschnitt (64) aus einer mechanischen Gleichgewichtsposition nach hinten ausgelenkt wird, wenn er zwischen der Auskleidung (40) und der Hülle (30) angeordnet ist, so dass er einer rückwärts gerichteten Vorspannung entlang der negativen Längsrichtung (-X) und relativ zu einem Schwenkbereich (74) an der Fersenkappe (66) ausgesetzt ist und ein Vorwärtsmoment auf den hinteren Abschnitt der Auskleidung (40) ausübt.

10. Wasserdichter Schuhartikel (10) nach Anspruch 8 oder 9, wobei sich die Hülle (30) nach oben und nur teilweise entlang des Beinabschnitts (46) der Auskleidung (40) erstreckt, um einen hinteren Hüllenabschnitt (36) an einer Wadenseite des Schafts (14) zu definieren, der einen oberen Rand beinhaltet, der sich oberhalb und in der Nähe eines oberen hinteren Rands (73) des vorstehenden Abschnitts (64) der Einlage (60) befindet.

11. Wasserdichter Schuhartikel (10) nach einem der vorhergehenden Ansprüche, wobei die Hülle (30) im Wesentlichen aus einem einheitlichen Körper aus geformten thermohärtenden oder thermoplastischem Elastomer, vorzugsweise Polyurethan, besteht.

12. Wasserdichter Schuhartikel (10) nach Anspruch 11, wobei die Hülle (30) durch ein Spritzgussverfahren direkt an die Auskleidung (40) geformt ist, um eine flexible, einheitliche Schicht aus geformtem Material zu bilden, die die Auskleidung (30) fest umschließt und dauerhaft mit ihr verbunden ist.

13. Wasserdichter Schuhartikel (10) nach einem der Ansprüche 8 bis 12, wobei die Einlage (60) in das elastische Material der Hülle (30) eingebettet ist.

14. Verfahren zur Herstellung eines wasserdichten Schuhartikels (10) nach einem der Ansprüche 1 bis 13.

## Revendications

1. - Produit chaussure étanche à l'eau (10), par exemple une botte ou une chaussure montante, comprenant une empeigne (12) et une semelle extérieure (26) qui est fixée à l'empeigne, l'empeigne comprenant :
- une doublure (40), avec une surface intérieure (42) qui renferme un vide intérieur (18) destiné à recevoir un pied, et définissant une partie pied (44) et une partie jambe (46) qui s'étend vers le haut à partir de la partie pied (44) ;
- une coque moulée étanche à l'eau (30) qui enveloppe au moins la partie pied de la doublure ;
la doublure étant formée d'une pluralité de couches superposées et adjacentes (54, 55, 56, 57), qui forment conjointement un stratifié et comprennent :
- une première couche (54) constituée essentiellement d'un tissu souple de haute résistance ;
- une deuxième couche (55) constituée essentiellement d'une mousse à cellules ouvertes compressible, et
- une troisième couche (56) constituée essentiellement d'une membrane imperméable à l'eau mais perméable à la vapeur d'eau ;
la partie jambe (46) de la doublure (40) s'étendant au-delà de la coque (30) pour former une tige (14), avec une ou plusieurs parties de tige (48, 50, 52) de la doublure restant exposées et découvertes par la coque (30), la coque (30) s'étendant vers le haut et seulement partiellement le long de la partie jambe (46) de la doublure (40), pour définir une partie de coque avant (34) sur un côté tibia de la tige (14), une partie de coque arrière (36) sur un côté mollet de la tige (14), et des parties de coque latérales (37) sur des côtés latéraux opposés de la tige, et les parties de coque latérales (37) ayant une épaisseur réduite pour augmenter localement une souplesse dans le plan et permettre aux parties de coque avant et arrière de dévier temporairement vers l'extérieur lorsqu'un pied est introduit dans le vide intérieur (18).

2. - Produit chaussure étanche à l'eau (10) selon la revendication 1, dans lequel la première couche (54) borde directement et fait face au vide intérieur (18), et est successivement recouverte par la deuxième couche (55) et la troisième couche (56), respectivement.

3. - Produit chaussure étanche à l'eau (10) selon la revendication 1 ou 2, dans lequel les couches superposées et adjacentes (54, 55, 56, 57) comprennent en outre une quatrième couche (57), qui est constituée essentiellement d'un tissu de haute résistance au déchirement et de haute résistance en traction, et qui définit une surface extérieure (43) de la doublure (40).

4. - Produit chaussure étanche à l'eau (10) selon l'une quelconque des revendications 1 à 3, dans lequel la mousse à cellules ouvertes de la deuxième couche (55) est essentiellement constituée d'une mousse de polyuréthane à cellules ouvertes sensiblement élastiquement compressible.

5. - Produit chaussure étanche à l'eau (10) selon l'une quelconque des revendications 1 à 4, dans lequel la membrane dans la troisième couche (56) est un film de polyuréthane microporeux, un film de polyester microporeux ou un film de polytétrafluoroéthylène microporeux, qui peut avoir une épaisseur comprise dans une plage allant de 20 micromètres à 40 micromètres.

6. - Produit chaussure étanche à l'eau (10) selon l'une quelconque des revendications précédentes, dans lequel la coque (30) est directement moulée et fixée à la doublure (40), de telle sorte que la doublure est inamovible du produit chaussure.

7. - Produit chaussure étanche à l'eau (10) selon l'une quelconque des revendications 1 à 6, dans lequel les parties de coque latérales (37) relient les parties de coque avant et arrière (34, 36) le long d'une périphérie de la tige (14), et les parties de coque latérales (37) s'étendent sur des hauteurs plus petites le long de la tige (14) par comparaison aux parties de coque avant et arrière (34, 36) de façon à recouvrir uniquement des parties cheville de la doublure (40).

8. - Produit chaussure étanche à l'eau (10) selon l'une quelconque des revendications précédentes, comprenant en outre un insert (60) formé d'un matériau ayant une dureté et une rigidité accrues par comparaison à la coque (30), et disposé entre la doublure (40) et la coque ;
l'insert étant réalisé sous la forme d'un unique corps qui comprend une partie en saillie (64), un contrefort (66) et un cambrion (68), la partie en saillie s'étendant vers le haut à partir du contrefort et le long de la région tige arrière de la doublure, et fournit une trajectoire de guidage pour un talon du pied pendant l'introduction dans le vide intérieur (18).

9. - Produit chaussure étanche à l'eau (10) selon la revendication 8, dans lequel la partie en saillie (64) est déviée vers l'arrière à partir d'une position d'équilibre mécanique lorsqu'elle est disposée entre la doublure (40) et la coque (30), de façon à être soumise à une précontrainte vers l'arrière le long de la direction longitudinale négative (-X) et par rapport à une région de pivot (74) sur le contrefort (66), et à exercer un moment vers l'avant sur la partie arrière de la doublure (40).

10. - Produit chaussure étanche à l'eau (10) selon la revendication 8 ou 9, dans lequel la coque (30) s'étend vers le haut et seulement partiellement le long de la partie jambe (46) de la doublure (40), pour définir une partie de coque arrière (36) sur un côté mollet de la tige (14), qui comprend un bord supérieur qui est situé au-dessus et près d'un bord arrière supérieur (73) de la partie en saillie (64) de l'insert (60).

11. - Produit chaussure étanche à l'eau (10) selon l'une quelconque des revendications précédentes, dans lequel la coque (30) est essentiellement constituée d'un corps unitaire en élastomère thermodurcissable ou thermoplastique moulé, de préférence en polyuréthane.

12. - Produit chaussure étanche à l'eau (10) selon la revendication 11, dans lequel la coque (30) est moulée directement sur la doublure (40) par un procédé de moulage par injection pour former une couche unitaire souple de matériau moulé qui enveloppe étroitement et est fixée de manière permanente à la doublure (30).

13. - Produit chaussure étanche à l'eau (10) selon l'une quelconque des revendications 8 à 12, dans lequel l'insert (60) est incorporé dans le matériau souple de la coque (30).

14. - Procédé de fabrication d'un produit chaussure étanche à l'eau (10) selon l'une quelconque des revendications 1 à 13.
